# EUROPEAN PATENT APPLICATION

(11) **EP 3 609 118 A1**
(43) Date of publication of application: **12.02.2020**
(21) Application number: 18911326.9
(22) Date of filing: 14.06.2018
(51) Int. Cl.: H04L 9/08, H04L 9/32, H04L 12/24

(54) **METHOD AND SYSTEM FOR MANAGING CLOUD SERVICE CLUSTER**

(30) Priority: 10.05.2018 CN 201810444309
(71) Applicant: Wangsu Science & Technology Co., Ltd., Shanghai 200030 (CN)
(72) Inventor: The designation of the inventor has not yet been filed
(74) Representative: Hanna Moore + Curley
(86) International application number: PCT/CN2018/091212
(87) International publication number: WO 2019/214011

(57) **Abstract**

Method and system for managing a cloud service cluster are provided. A platform authentication server and a cluster authentication server respectively generate an authentication key according to a preset key generation manner; when receiving cluster management instruction for a target cluster, a cloud management platform sends an authentication information acquisition request to the platform authentication server to generate authentication information, and feeds back the authentication information to the cloud management platform to send a cluster management request carrying the authentication information to a target management server of the target cluster; the target management server extracts the authentication information from the cluster management request, and sends the authentication information to a target cluster authentication server of the target cluster to perform an authentication on the authentication information according to the authentication key; and if the authentication is successful, the target management server executes the cluster management request.

## Description

### TECHNICAL FIELD

The present disclosure relates to the field of cloud computing technologies and, in particular, to a method and a system for managing a cloud service cluster.

### BACKGROUND

Openstack is a software development tool for cloud computing. Cloud service providers can use Openstack to build a cloud management platform. Customers who purchase cloud services can manage multiple virtualized cloud service clusters through the cloud management platform. An authentication server is provided in both the cloud management platform and the cloud service cluster, and the authentication server can use a Keystone component configured thereon to provide the authentication service for the cloud management platform and the cloud service cluster.

The authentication server of the cloud management platform (which may be referred to as a platform authentication server) may generate and store an authentication key for the authentication service in advance, and send the authentication key to an authentication server (which may be referred to as a cluster authentication server) of the cloud service cluster. In this way, after receiving a management instruction from user for the cloud service cluster (such as shutting down, restarting, or adding a virtual server in the cloud service cluster), the cloud management platform may generate a corresponding management request according to the management instruction. At the same time, the cloud management platform may encrypt the management request through the platform authentication server, and then send the encrypted management request to the management server of cloud service cluster. Afterwards, the management server may forward the received encrypted management request to the cluster authentication server, so that the cluster authentication server decrypts the encrypted management request by using the stored authentication key. If the decryption succeeds, it is determined that the cloud service cluster succeeds authenticating the cloud management platform. Then the management server of the cloud service cluster can execute the management request.

In the process of implementing the present disclosure, the inventors have found that the prior art has at least the following problems:

After the authentication key is generated, the cloud management platform needs to be distributed to each cloud service cluster through the network. In the process of distributing the authentication key through the network, the authentication key may be easily intercepted and tampered by others, resulting in lower security of the authentication service. Moreover, the authentication key sent by the cloud management platform to a cloud service cluster can only perform authentication services between the cloud management platform and the cloud service cluster, such that different cloud service clusters cannot mutually authenticate each other.

### SUMMARY

In order to solve the problem of the prior art, embodiments of the present disclosure provide a method and a system for managing a cloud service cluster. Technical solutions are as follows.

One aspect provides a method of managing a cloud service cluster, and the method includes the following.

A platform authentication server and a cluster authentication server of each one of a plurality of clusters respectively generate an authentication key according to a preset key generation manner.

When receiving cluster management instruction for a target cluster, a cloud management platform sends an authentication information acquisition request to the platform authentication server, so that the platform authentication server generates the authentication information according to the authentication key and feeds back the authentication information to the cloud management platform.

The cloud management platform sends a cluster management request carrying the authentication information to a target management server of the target cluster.

The target management server extracts the authentication information from the cluster management request and sends the authentication information to a target cluster authentication server of the target cluster, so that the target cluster authentication server can perform an authentication on the authentication information according to the authentication key.

If the authentication is successful, the target management server executes the cluster management request.

Further, the platform authentication server and the cluster authentication server of each one of the plurality of clusters respectively generating the authentication key according to the preset key generation manner, includes:

the platform authentication server and the cluster authentication server of each one of the plurality of clusters periodically determine the key generation factor and the key generation algorithm according to a current time, and generate the authentication key by using the key generation factor and the key generation algorithm, respectively.

Further, the platform authentication server and the cluster authentication server of each one of the plurality of clusters periodically determining the key generation factor and the key generation algorithm according to the current time, includes:

the platform authentication server and the cluster authentication server of each one of the plurality of clusters periodically determine a target coordinated world time corresponding to the current time as the key generation factor, and determine the key generation algorithm corresponding to the target coordinated world time, according to a locally stored correspondence relationship between a coordinated world time and the key generation algorithm.

Further, the method further includes the following.

The cloud management platform acquires cluster management information according to the cluster management instruction and adds the cluster management information to the authentication information acquisition request.

The platform authentication server generating the authentication information according to the authentication key, includes:

the platform authentication server extracts the cluster management information from the authentication information acquisition request and encrypts the cluster management information by using the authentication key and a locally pre-stored authentication algorithm to generate the authentication information.

Further, the target cluster authentication server authenticating the authentication information according to the authentication key, includes:

the target cluster authentication server decrypts the authentication information by using the authentication key and the locally pre-stored authentication algorithm.

The target management server executing the cluster management request if the authentication is successful, includes:

if the decrypting is successful, the target management server executes the cluster management request based on the cluster management information fed back and decrypted by the target cluster authentication server.

Further, the method further includes the following.

When the target cluster authentication server is restarted, the target cluster authentication server determines the key generation factor and the key generation algorithm according to the current time, and generates an authentication key by using the key generation factor and the key generation algorithm.

Further, the method further includes the following.

The cloud management platform generates signature information based on a preset signature algorithm and adds the signature information to the cluster management request.

The target management server extracting the authentication information from the cluster management request, includes:
the target management server verifies the signature information based on the preset signature algorithm; and
if the verifying succeeds, the target management server extracts the authentication information from the cluster management request.

Another aspect provides a system for managing cloud service cluster. The system includes a cloud management platform and a plurality of clusters. The cloud management platform includes a platform authentication server. The cluster includes a cluster authentication server and a management server, where:
the platform authentication server is configured to generate an authentication key according to a preset key generation manner;
the cluster authentication server is configured to generate the authentication key according to the preset key generation manner;
the cloud management platform is configured to when receiving cluster management instruction for a target cluster, send an authentication information acquisition request to the platform authentication server, so that the platform authentication server generates authentication information according to the authentication key, and feeds back the authentication information to the cloud management platform;
the cloud management platform is further configured to send, to the target management server of the target cluster, a cluster management request that carries the authentication information;
the target management server is configured to extract the authentication information from the cluster management request, and send the authentication information to a target cluster authentication server of the target cluster, so that the target cluster authentication server can perform an authentication on the authentication information according to the authentication key; and
the target management server is further configured to execute the cluster management request if the authentication is successful.

Further, the platform authentication server and the cluster authentication server are further configured to:
periodically determine a key generation factor and a key generation algorithm according to a current time and generate the authentication key by using the key generation factor and the key generation algorithm, respectively.

Further, the platform authentication server and the cluster authentication server are respectively used to:
periodically determine the target coordinated world time corresponding to the current time as a key generation factor and determine the key generation algorithm corresponding to the target coordinated world time, according to the a locally stored correspondence relationship between a coordinated world time and the key generation algorithm.

Further, the cloud management platform is further configured to:
acquire cluster management information according to the cluster management instruction and add the cluster management information to the authentication information acquisition request.

The platform authentication server is further configured to:
extract the cluster management information from the authentication information acquisition request and encrypt the cluster management information by using the authentication key and a locally pre-stored authentication algorithm to generate the authentication information.

Further, the target cluster authentication server is further configured to:
decrypt the authentication information by using the authentication key and the locally pre-stored authentication algorithm;

The target management server is further configured to:
if the decrypting is successful, execute the cluster management request based on the cluster management information fed back and decrypted by the target cluster authentication server.

Further, the target cluster authentication server is further configured to:
when the target cluster authentication server is restarted, determine the key generation factor and the key generation algorithm according to the current time, and generate an authentication key by using the key generation factor and the key generation algorithm.

Further, the cloud management platform is further configured to:
generate signature information based on a preset signature algorithm and add the signature information to the cluster management request.

The target management server is further configured to:
perform verification for the signature information based on the preset signature algorithm, and if the verifying succeeds, the target management server extracts the authentication information from the cluster management request.

The beneficial effects brought by the technical solutions provided by embodiments of the present disclosure are as follows.

In embodiments of the present disclosure, the platform authentication server and the cluster authentication server of each one of the plurality of cluster respectively generate the authentication key according to the preset key generation manner. When receiving the cluster management instruction for the target cluster, the cloud management platform sends the authentication information acquisition request to the platform authentication server, such that the platform authentication server generates the authentication information according to the authentication key and feeds back the authentication information to the cloud management platform. The cloud management platform sends the cluster management request carrying the authentication information to the target management server of the target cluster. The target management server extracts the authentication information from the cluster management request and sends the authentication information to the target cluster authentication server of the target cluster, so that the target cluster authentication server performs the authentication on the authentication information according to the authentication key. If the authentication is successful, the target management server executes the cluster management request. In this way, the platform authentication server of the cloud management platform and the cluster authentication server of each one of the plurality of clusters can independently generate the same authentication key according to the same preset key generation manner. When receiving the cluster management request carrying the authentication information, the cluster authentication server can perform the authentication on the authentication information through the authentication key generated by the server independently. Thus, the problem can be solved that the authentication key is easily intercepted and tampered by others through the network, and the security of the authentication service is improved. Meanwhile, the cloud service platform and each one of the plurality of clusters can independently generate the same authentication key to perform the authentication on the received authentication information, so that mutual authentication between the cloud service platform and each one of the plurality of clusters can be implemented.

### DESCRIPTION OF THE DRAWINGS

In order to more clearly illustrate the technical solutions in embodiments of the present disclosure, the drawings used in the description of the embodiments are briefly described below. It is obvious that the drawings in the following description are only some embodiments of the present disclosure. Other drawings may also be obtained from those of ordinary skill in the art in view of the drawings without any creative effort.
FIG. 1 is a structural diagram of a system for managing a cloud service cluster according to embodiments of the present disclosure;
FIG. 2 is a flowchart of a method for managing a cloud service cluster according to embodiments of the present disclosure; and
FIG. 3 is a diagram of steps of managing a cloud service cluster according to embodiments of the present disclosure.

### DETAILED DESCRIPTION

To make the objectives, technical solutions, and advantages of the present disclosure clearer, the embodiments of the present disclosure are further described in detail below with reference to the accompanying drawings.

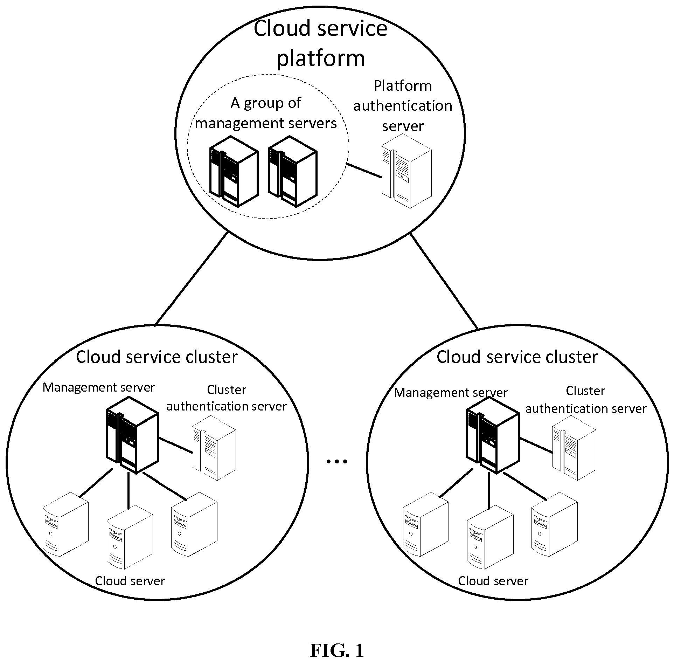

Embodiment of the disclosure provides a method for managing a cloud service cluster, which can be implemented by a cloud management platform and multiple cloud service clusters. The cloud management platform may be a group of management servers for managing multiple cloud service clusters and may be composed of one or more management servers and/or virtual management servers. The user may manage the cloud service clusters through the cloud management platform, such as shutting down, restarting, and adding cloud servers and/or virtual cloud servers in the cloud service cluster. The cloud management platform may include a platform authentication server, and the platform authentication server may be used for authenticating and processing messages sent and received by the cloud management platform. Each cloud service cluster can include multiple cloud servers and/or multiple virtual cloud servers, and each cloud service cluster can be configured to provide one or more cloud services to users, such as a cloud computing service, a cloud storage service, etc. Each cloud service cluster may include a management server and a cluster authentication server. The management server may be configured to execute a management request sent by the cloud management platform, and the cluster authentication server may be configured to perform an authentication on messages sent and received by the cloud service cluster. The specific system framework can be seen in FIG. 1. Each of the foregoing servers may include a processor, a memory, and a transceiver. The processor may be configured to process the management cloud service cluster in the following process, and the memory may be configured to store data required and data generated in the following processing. The transceiver can be configured to receive and transmit relevant data in the following processing.

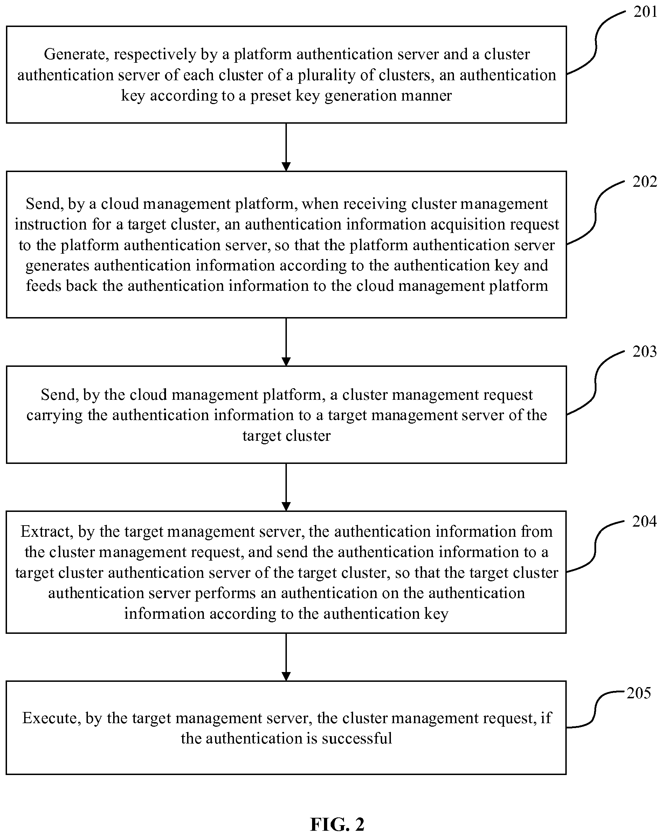

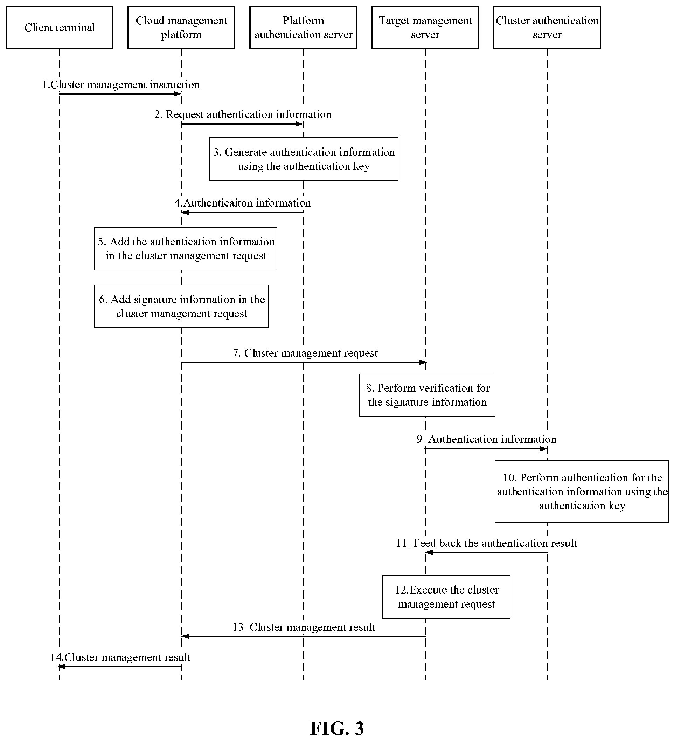

The processing flow shown in FIG. 2 is described in detail below with reference to specific implementation manners. Referring to FIG. 3, the content can be as follows.

Step 201: The platform authentication server and the cluster authentication server of each one of the plurality of clusters respectively generate an authentication key according to a preset key generation manner.

In some embodiments, after purchasing the cloud service from the cloud service provider, the user can install and run the client terminal of the cloud management platform provided by the cloud service provider. The user can access the cloud management platform through the client terminal, and then use the cloud management platform to manage the cloud service cluster (which can be simply referred to as a cluster), so that various services such as data computing and data storage can be performed based on the cluster. In order to ensure information security, the technicians on the cloud service side can set the same key generation manner for the platform authentication server of the cloud management platform and the cluster authentication server of each one of the plurality of clusters in advance. In this way, the platform authentication server and each cluster authentication server can independently generate and locally store the authentication key according to the same preset key generation manner. As such, in the following process of managing cloud service cluster, the generated authentication key can be applied to realize the information authentication between the cloud management platform and the cloud service cluster. Here, the platform authentication server and the cluster authentication server of each one of the plurality of clusters can generate the same authentication key independently according to the same preset key generation manner, so that the same authentication key can be used to implement the mutual authentication between the cloud service platform and each one of the plurality of clusters.

Optionally, the authentication key may be generated by the key generation factor and the key generation algorithm. Correspondingly, the processing of Step 201 may be as follows: the platform authentication server and the cluster authentication server of each one of the plurality of clusters periodically determine the key generation factor and the key generation algorithm according to the current time, respectively use the key generation factor and the key generation algorithm to generate the authentication key.

The key generation factor may be an input parameter for generating the authentication key, and the key generation algorithm may be a specific algorithm for generating the authentication key based on the key generation factor.

In some embodiments, the technicians can set an updating cycle of the authentication key in the platform authentication server and the cluster authentication server of each one of the plurality of clusters in advance, so that the platform authentication server and each cluster authentication server can periodically generate an authentication key according to the above updating cycle. For example, a method of periodically generating the authentication key may be generating every 12 hours or 24 hours starting from the same time, so that the authentication key can be valid only in the current period. When the next cycle comes, the platform authentication server and the cluster authentication server of each one of the plurality of clusters can generate an authentication key again to replace the old authentication key. As such, the authentication key can be replaced frequently, thereby further improving the security of the information authentication. In the process of generating the authentication key, the platform authentication server and the cluster authentication server of each one of the plurality of clusters may determine the current time, and then determine the same key generation factor and the key generation algorithm according to the current time. After that, the key generation factor is used as an input parameter of the key generation algorithm to output the authentication key. Specifically, the cycle of the key generation and the key generation algorithm can be set by modifying the authentication source files of the platform authentication server and the cluster authentication server of each one of the plurality of clusters, such as /keystone/keystone/common/fernet_utils.py.

Optionally, the key generation factor may be a coordinated world time, and the process of determining the key generation factor and the key generation algorithm periodically according to the current time may be as follows: the platform authentication server and the cluster authentication server of each one of the plurality of clusters periodically determine the target coordinated world time corresponding the current time as the key generation factor, and determine the key generation algorithm corresponding to the determined target coordinated world time, according to correspondence relationship between the locally stored coordinated world time and the key generation algorithm.

In some embodiments, the coordinated world time is also known as the world unified time. The network standards of many countries in the world abide by this time, unify the network services according to the common time. For example, when the current time of the coordinated world time is 11:50, the actual time in China is 19:50, and the actual time in the United States is 7:50, China and the United States can jointly carry out network services in accordance with the coordinated world time 11:50. When the platform authentication server and the cluster authentication server of each one of the plurality of clusters are deployed in various counties in the world, for example, the cloud service platform can be deployed in China, a cluster A can be deployed in the United States, a cluster B can be deployed in the United Kingdom. The platform authentication server and cluster authentication servers of the clusters A and B can acquire the coordinated world time corresponding to the current time, thereby periodically generating the authentication key based on the coordinated world time. Since the coordinated world time has different time units, such as year, month, day, hour, minute, second, etc., a certain time unit of the coordinated world time can be determined as the key generation factor. For example, the day can be determined as the timing unit. Then different times within the same day, such as January 19, 2018, it can be determined that the current time corresponding to the coordinated world time is January 19, 2018, and the key generation factor is January 19, 2018.

On the other hand, in order to improve the security of authentication, different key generation algorithms, such as a consistent HASH algorithm and a consistent Paxos algorithm, etc. can be configured. These different key generation algorithms can be associated with the coordinated world time in advance to generate the correspondence relationship between the coordinated world time and the key generation algorithm. Referring to Table 1, the unit digits 1, 4, and 7 of the specific days, such as the first, fourth, seventh, fourteenth, seventeenth, twenty first, twenty fourth, and twenty seventh of each month in the coordinated world time can correspond to the key generation algorithm A. Specific days corresponding to other key generation algorithms are analogous and are not described herein. In this way, after determining the coordinated world time, the key generation algorithm corresponding to the coordinated world time corresponding to the current time can be determined by the correspondence relationship between the coordinated world time and the key generation algorithm.

**Table 1**

| Unit digits of specific days in the coordinated world time | Key generation algorithm |
|---|---|
| 1, 4, 7 | Algorithm A |
| 2, 5, 8 | Algorithm B |
| 3, 6, 9 | Algorithm C |
| 0 | Algorithm D |

Step 202: When receiving the cluster management instruction for the target cluster, the cloud management platform sends an authentication information acquisition request to the platform authentication server, so that the platform authentication server generates the authentication information according to the authentication key and feeds back the authentication information to the cloud management platform.

In some embodiments, when the user needs to shut down, restart, or add a virtual server in a cloud service cluster (such as a target cluster), the user can send corresponding cluster management instructions to the cloud management platform through the client terminal, so as to perform corresponding management for the cloud server and/or the virtual cloud server of the target cluster, referring to step 1 in FIG. 3. When receiving the cluster management instruction of the user for the target cluster, the cloud management platform can send authentication information acquisition request to the platform authentication server, referring to step 2 in FIG. 3. After receiving the authentication information acquisition request, the platform authentication server can read the authentication key stored locally and generate the corresponding authentication information according to the authentication key, for example, referring to step 3 in FIG. 3. After that, the platform authentication server can feed back the authentication information to the cloud management platform, referring to step 4 in FIG. 3.

Optionally, the cloud management platform may add the cluster management information in the authentication information acquisition request. Correspondingly, the partial processing of step 202 may be as follows: the platform authentication server extracts the cluster management information from the authentication information acquisition request and uses the authentication key and the locally pre-stored authentication algorithm to encrypt the cluster management information and generate authentication information.

In some embodiments, after receiving the cluster management instruction for the target cluster, the cloud management platform may acquire the cluster management information carried in the cluster management instruction, where the cluster management information may include account information such as the user name and password of the user, and control information such as the quantity of the virtual servers to restart, and the shutdown time, etc. After acquiring the cluster management information, the cloud management platform can add the cluster management information to the authentication information acquisition request. In this way, after receiving the authentication information acquisition request, the platform authentication server may extract the cluster management information, and then use the locally generated authentication key and the locally pre-stored authentication algorithm to encrypt the cluster management information, so as to generate the authentication information. The above-mentioned locally pre-stored authentication algorithm may be a commonly used encryption algorithm, such as an advanced encryption standard (AES) algorithm, a data encryption standard (DES) algorithm, etc.

Step 203: The cloud management platform sends a cluster management request carrying the authentication information to a target management server of the target cluster.

In the implementation, after receiving the cluster management instruction, the cloud management platform may generate a corresponding cluster management request, and then may add the authentication information obtained from the platform authentication server to the cluster management request, referring to step 5 in FIG. 3. Then, the cloud management platform may send the cluster management request carrying the authentication information to the target management server of the target cluster, referring to step 7 of FIG. 3.

Step 204: The target management server extracts the authentication information from the cluster management request and sends the authentication information to the target cluster authentication server of the target cluster, so that the target cluster authentication server can perform the authentication on the authentication information according to the authentication key.

In some embodiments, after receiving the cluster management request, the target management server of the target cluster may extract the authentication information from the cluster management request, and then the target management server may send the authentication information to the target cluster authentication server of the target cluster, referring to step 9 of FIG. 3. In this way, the target cluster authentication server can perform the authentication on the authentication information by using the locally stored authentication key after receiving the authentication information, for example, referring to step 10 in FIG. 3.

Optionally, the target cluster authentication server may further perform the authentication on the authentication information by using a locally pre-stored authentication algorithm. Accordingly, the partial processing of step 204 may be as follows: the target cluster authentication server may further utilize an authentication key and a locally pre-stored authentication algorithm to decrypt the authentication information.

In some embodiments, the technician can pre-configure the same authentication algorithm in the cluster authentication server and the platform authentication server of each one of the plurality of clusters, so that after receiving the authentication information, the target cluster authentication server can invoke the locally generated authentication key and the local pre-stored authentication algorithm to decrypt and perform the authentication on the authentication information.

Step 205: If the authentication is successful, the target management server executes the cluster management request.

In the implementation, if the authentication information is successfully authenticated, the target cluster authentication server may send an authentication success message to the target cluster management server, so that the target management server may execute the cluster management request after receiving the authentication success message, referring to the steps 11 and 12 in FIG. 3. After executing the cluster management request, the cluster management server can feed back the cluster management result to the cloud management platform. After that, the cloud management platform can forward the cluster management result to the client terminal of the cloud management platform, referring to steps 13 and 14 of FIG. 3.

In another case, the target management server may also determine whether the target cluster authentication server successfully authenticates the authentication information by actively detecting the authentication progress of the target cluster authentication server.

Optionally, after the authentication succeeds, the target cluster authentication server may further feed back the cluster management information to the target management server. Correspondingly, the processing of step 205 may be as follows: if the decrypting is successful, the target management server can execute the cluster management request, according to the cluster management information decrypted by the target cluster authentication server.

In some embodiments, a successful authentication may be that the decrypting is successful, that is, after the target cluster authentication server decrypts the authentication information, the cluster management information is successfully obtained. If the target cluster authentication server cannot decrypt the authentication information, or what obtained after decrypting is not the cluster management information, and if the information obtained by the decrypting is not the information in the preset format, the decryption fails. After the authentication information is successfully decrypted, the target cluster authentication server may feed back the decrypted cluster management information to the target management server. In this way, the target management server can execute the cluster management request based on the received cluster management information.

Optionally, when the target cluster authentication server is restarted, the target cluster authentication server may timely generate an authentication key corresponding to the current time, and the corresponding processing may be as follows: when the target cluster authentication server is restarted, the target cluster authentication server determines the key generation factor and the key generation algorithm according to the current time, and generates the authentication key using the key generation factor and the key generation algorithm.

In some embodiments, restarting target cluster authentication server may include multiple scenarios, such as a planned restarting, when a failure occurs and restarting after the failure is resolved, and when a new target cluster authentication server is added into the target cluster, the new target cluster authentication server restarting for the first time. After restarting, the target cluster authentication server can determine the key generation factor and the key generation algorithm corresponding to the current time, of which corresponding processing can be referred to the step 201. In this way, it can be ensured that the authentication key in the target cluster authentication server after the restart is the same as the authentication key in other normal target cluster authentication servers.

Optionally, in order to further improve the security of the information authentication, the signature information may be added to the cluster management request, and the corresponding processing may be as follows: the cloud management platform generates signature information based on the preset signature algorithm and adds the signature information to the cluster management request.

In some embodiments, after generating the cluster management request, the cloud management platform may generate the signature information based on the preset signature algorithm, and then add the signature information to the cluster management request, referring to step 6 in FIG. 3. In this way, after receiving the cluster management request, the target management server can determine whether the cluster management request is sent by the cloud management platform by using the carried signature information. Specifically, the cloud management platform can integrate a keeper signature component, such as a zookeeper component. Then, the cloud management platform can generate signature information based on a preset signature algorithm in the keeper signature component. The foregoing preset signature algorithm may be a common signature algorithm. For example, when the preset signature algorithm is a keyed-Hash message authentication code (HMAC) signature algorithm, the cloud management platform calculates the HASH value, i.e., the signature information, through the HMAC private key in the keeper service, and add the HASH value to the header information of the cluster management request.

Optionally, when the cluster management request carries the signature information, the target management server may first verify the signature information, and then determine whether to perform the subsequent authentication process. The corresponding processing may be as follows: the target management server verifies the signature information based on the preset signature algorithm; if the verifying is successful, the target management server extracts the authentication information from the cluster management request.

In some embodiments, the target management server can also be integrated with the keeper signature component described above. In this way, after receiving the cluster management request carrying the signature information and the authentication information, the target management server may first verify the signature information based on the preset signature algorithm in the keeper signature component, referring to step 8 of FIG. 3. It should be noted that the same preset signature algorithm is adopted in the target management server and the cloud management platform, so that the target management server can calculate the HASH value through the HMAC private key in the keeper service. If the HASH calculated by the target management server is the same as the HASH carried by the cluster management request, it indicates that the verification of the signature information is successful; and if not, it indicates that the verification of the signature information fails. Then, if the verifying of the signature information by the target management server is successful, the target management server extracts the authentication information from the cluster management request, continues to execute the above process, and performs the authentication on the authentication information. If the verifying of the signature information by the target management server fails, the target management server no longer performs the authentication processing on the authentication information, that is, refuses to execute the cluster management request.

In embodiments of the present disclosure, the platform authentication server and the cluster authentication server of each one of the plurality of clusters respectively generate the authentication key according to the preset key generation manner. When receiving the cluster management instruction for the target cluster, the cloud management platform sends the authentication information acquisition request to the platform authentication server, such that the platform authentication server generates the authentication information according to the authentication key and feeds back the authentication information to the cloud management platform. The cloud management platform sends the cluster management request carrying the authentication information to the target management server of the target cluster. The target management server extracts the authentication information from the cluster management request and sends the authentication information to the target cluster authentication server of the target cluster, so that the target cluster authentication server performs the authentication on the authentication information according to the authentication key. If the authentication is successful, the target management server executes the cluster management request. In this way, the platform authentication server of the cloud management platform and the cluster authentication server of each one of the plurality of clusters can independently generate the same authentication key according to the same preset key generation manner. When receiving the cluster management request carrying the authentication information, the cluster authentication server can perform the authentication on the authentication information through the authentication key generated by the server independently. Thus, the problem can be solved that the authentication key is easily intercepted and tampered by others through the network, and the security of the authentication service is improved. Meanwhile, the cloud service platform and each one of the plurality of clusters can independently generate the same authentication key to perform the authentication on the received authentication information, so that mutual authentication between the cloud service platform and each one of the plurality of clusters can be implemented.

Based on the same technical concept, embodiments of the present disclosure further provide a system for managing cloud service cluster. The system includes a cloud management platform and a plurality of clusters. The cloud management platform includes a platform authentication server. The cluster includes a cluster authentication server and a management server.

The platform authentication server is configured to generate an authentication key according to a preset key generation manner.

The cluster authentication server is configured to generate an authentication key according to the preset key generation manner.

The cloud management platform is configured to when receiving a cluster management instruction for the target cluster, send an authentication information acquisition request to the platform authentication server. As such, the platform authentication server generates the authentication information according to the authentication key and feeds back the authentication information to the cloud management platform.

The cloud management platform is further configured to send, to the target management server of the target cluster, a cluster management request that carries the authentication information.

The target management server is configured to extract the authentication information from the cluster management request and send the authentication information to a target cluster authentication server of the target cluster, so that the target cluster authentication server can perform the authentication on the authentication information according to the authentication key.

The target management server is further configured to execute the cluster management request if the authentication is successful.

Further, the platform authentication server and the cluster authentication server are further configured to:
periodically determine a key generation factor and a key generation algorithm according to the current time and generate an authentication key by using the key generation factor and the key generation algorithm, respectively.

Optionally, the platform authentication server and the cluster authentication server are respectively used to:
periodically determine the target coordinated world time corresponding to the current time as a key generation factor and determine the key generation algorithm corresponding to the target coordinated world time, according to a locally stored correspondence relationship between a coordinated world time and the key generation algorithm.

Optionally, the cloud management platform is further configured to:
acquire cluster management information according to the cluster management instruction and add the cluster management information to the authentication information acquisition request.

The platform authentication server is further configured to:
extract the cluster management information from the authentication information acquisition request and encrypt the cluster management information by using the authentication key and a locally pre-stored authentication algorithm to generate the authentication information.

Optionally, the target cluster authentication server is further configured to:
decrypt the authentication information by using the authentication key and a locally pre-stored authentication algorithm.

The target management server is further configured to:
if the decrypting is successful, execute the cluster management request based on the cluster management information fed back and decrypted by the target cluster authentication server.

Optionally, the target cluster authentication server is further configured to:
when the target cluster authentication server is restarted, determine the key generation factor and the key generation algorithm according to the current time, and generate an authentication key by using the key generation factor and the key generation algorithm.

Optionally, the cloud management platform is further configured to:
generate signature information based on a preset signature algorithm and add the signature information to the cluster management request.

The target management server is further configured to:
verify the signature information based on the preset signature algorithm, and if the verifying succeeds, the target management server extracts the authentication information from the cluster management request.

In embodiments of the present disclosure, the platform authentication server and the cluster authentication server of each one of the plurality of clusters respectively generate the authentication key according to the preset key generation manner. When receiving the cluster management instruction for the target cluster, the cloud management platform sends the authentication information acquisition request to the platform authentication server, such that the platform authentication server generates the authentication information according to the authentication key and feeds back the authentication information to the cloud management platform. The cloud management platform sends the cluster management request carrying the authentication information to the target management server of the target cluster. The target management server extracts the authentication information from the cluster management request and sends the authentication information to the target cluster authentication server of the target cluster, so that the target cluster authentication server performs the authentication on the authentication information according to the authentication key. If the authentication is successful, the target management server executes the cluster management request. In this way, the platform authentication server of the cloud management platform and the cluster authentication server of each one of the plurality of clusters can independently generate the same authentication key according to the same preset key generation manner. When receiving the cluster management request carrying the authentication information, the cluster authentication server can perform the authentication on the authentication information through the authentication key generated by the server independently. Thus, the problem can be solved that the authentication key is easily intercepted and tampered by others through the network, and the security of the authentication service is improved. Meanwhile, the cloud service platform and each one of the plurality of clusters can independently generate the same authentication key to perform the authentication on the received authentication information, so that mutual authentication between the cloud service platform and each one of the plurality of clusters can be implemented.

An ordinary person skilled in the art can understand that all or part of the steps of implementing the above embodiments may be completed by hardware or may be instructed by a program to execute related hardware, and the program may be stored in a computer readable storage medium. The storage medium described above may be a read-only memory, a magnetic disk, or an optical disk, etc.

The above are only the preferred embodiments of the present disclosure and are not intended to limit the present disclosure. Any modifications, equivalents, improvements, etc., which are within the spirit and scope of the present disclosure, should be included in the protection of the present disclosure.

## Claims

1. A method for managing a cloud service cluster, comprising:
generating, respectively by a platform authentication server and a cluster authentication server of each one of a plurality of clusters, an authentication key according to a preset key generation manner;
sending, by a cloud management platform, when receiving cluster management instruction for a target cluster, an authentication information acquisition request to the platform authentication server, so that the platform authentication server generates authentication information according to the authentication key and feeds back the authentication information to the cloud management platform;
sending, by the cloud management platform, a cluster management request carrying the authentication information to a target management server of the target cluster;
extracting, by the target management server, the authentication information from the cluster management request, and sending the authentication information to a target cluster authentication server of the target cluster, so that the target cluster authentication server performs an authentication on the authentication information according to the authentication key; and
executing, by the target management server, the cluster management request, if the authentication is successful.

2. The method according to claim 1, wherein generating, respectively by the platform authentication server and the cluster authentication server of each one of the plurality of clusters, the authentication key according to the preset key generation manner, includes:
determining, periodically by the platform authentication server and the cluster authentication server of each one of the plurality of clusters, a key generation factor and a key generation algorithm according to a current time, and
generating the authentication key by using the key generation factor and the key generation algorithm, respectively.

3. The method according to claim 2, wherein the platform authentication server and the cluster authentication server of each one of the plurality of clusters periodically determining the key generation factor and the key generation algorithm according to the current time, includes:
determining, periodically by the platform authentication server and the cluster authentication server of each one of the plurality of clusters, a target coordinated world time corresponding to the current time as the key generation factor, and
determining the key generation algorithm corresponding to the target coordinated world time, according to a locally stored correspondence relationship between a coordinated world time and the key generation algorithm.

4. The method according to claim 1, further comprising:
acquiring, by the cloud management platform, cluster management information according to the cluster management instruction, and adding the cluster management information to the authentication information acquisition request, wherein:
the platform authentication server generating the authentication information according to the authentication key, includes:
extracting, by the platform authentication server, the cluster management information from the authentication information acquisition request, and encrypting the cluster management information using the authentication key and a locally pre-stored authentication algorithm, to generate the authentication information.

5. The method according to claim 4, wherein the target cluster authentication server performing the authentication on the authentication information according to the authentication key, includes:
decrypting, by the target cluster authentication server, the authentication information by using the authentication key and the locally pre-stored authentication algorithm, wherein:
the target management server executing the cluster management request if the authentication is successful, includes:
executing, by the target management server, the cluster management request based on the cluster management information fed back and decrypted by the target cluster authentication server, if the decrypting is successful.

6. The method according to claim 3, further comprising:
when the target cluster authentication server is restarted, determining, by the target cluster authentication server, the key generation factor and the key generation algorithm according to the current time, and generating an authentication key using the key generation factor and the key generation algorithm.

7. The method according to claim 1, further comprising:
generating, by the cloud management platform, signature information based on a preset signature algorithm, and adding the signature information to the cluster management request, wherein:
the target management server extracting the authentication information from the cluster management request, includes:
verifying, by the target management server, the signature information based on the preset signature algorithm; and
if the verifying succeeds, extracting, by the target management server, the authentication information from the cluster management request.

8. A system for managing a cloud service cluster, the system comprising a cloud management platform and a plurality of clusters, the cloud management platform comprising a platform authentication server, each one of the plurality of clusters comprising a cluster authentication server and a management server, wherein:
the platform authentication server is configured to generate an authentication key according to a preset key generation manner;
the cluster authentication server is configured to generate the authentication key according to the preset key generation manner;
the cloud management platform is configured to when receiving cluster management instruction for a target cluster, send an authentication information acquisition request to the platform authentication server, such that the platform authentication server generates authentication information according to the authentication key and feeds back the authentication information to the cloud management platform;
the cloud management platform is further configured to send, to a target management server of the target cluster, a cluster management request that carries the authentication information;
the target management server is configured to extract the authentication information from the cluster management request, and send the authentication information to the target cluster authentication server of the target cluster, so that the target cluster authentication server performs an authentication on the authentication information according to the authentication key; and
the target management server is further configured to execute the cluster management request if the authentication is successful.

9. The system according to claim 8, wherein the platform authentication server and the cluster authentication server are further configured to:
periodically determine a key generation factor and a key generation algorithm according to a current time, and generate the authentication key by using the key generation factor and the key generation algorithm, respectively.

10. The system according to claim 9, wherein the platform authentication server and the cluster authentication server are further configured to:
periodically determine a target coordinated world time corresponding to the current time as the key generation factor, and determine the key generation algorithm corresponding to the target coordinated world time, according to a locally stored correspondence relationship between a coordinated world time and the key generation algorithm.

11. The system according to claim 8, wherein:
the cloud management platform is further configured to:
acquire cluster management information according to the cluster management instruction, and add the cluster management information to the authentication information acquisition request; and
the platform authentication server is further configured to:
extract the cluster management information from the authentication information acquisition request, and encrypt the cluster management information by using the authentication key and a locally pre-stored authentication algorithm to generate the authentication information.

12. The system according to claim 11, wherein:
the target cluster authentication server is further configured to:
decrypt the authentication information by using the authentication key and the locally pre-stored authentication algorithm; and
the target management server is further configured to:
if the decrypting is successful, execute the cluster management request based on the cluster management information fed back and decrypted by the target cluster authentication server.

13. The system according to claim 10, wherein the target cluster authentication server is further configured to:
when the target cluster authentication server is restarted, determine the key generation factor and the key generation algorithm according to the current time, and generate the authentication key by using the key generation factor and the key generation algorithm.

14. The system according to claim 8, wherein:
the cloud management platform is further configured to:
generate signature information based on a preset signature algorithm, and add the signature information to the cluster management request; and
the target management server is further configured to:
verify the signature information based on the preset signature algorithm, and if the verifying succeeds, the target management server extracts the authentication information from the cluster management request.
